# EUROPEAN PATENT SPECIFICATION

(11) **EP 1 819 774 B1**
(45) Date of publication and mention of the grant of the patent: **13.04.2016**
(21) Application number: 05848809.9
(22) Date of filing: 09.11.2005
(51) Int. Cl.: C08L 71/12, C08L 77/00, C08K 3/34

(54) **CONDUCTIVE POLY(ARYLENE ETHER)-POLYAMIDE COMPOSITIONS, AND RELATED METHODS AND ARTICLES**
LEITFÄHIGE POLY-(ARYLENETHER)-POLYAMIDZUSAMMENSETZUNGEN UND DAMIT ZUSAMMENHÄNGENDE VERFAHREN UND ARTIKEL
COMPOSITIONS CONDUCTRICES DE POLY(ARYLENE ETHER) ET DE POLYAMIDE, PROCEDES ET ARTICLES ASSOCIES

(30) Priority: 03.12.2004 US 4109
(43) Date of publication of application: 22.08.2007
(73) Proprietor: SABIC Innovative Plastics IP B.V., 4612 PX Bergen op Zoom (NL)
(72) Inventor: MATTHIJSSEN, Johannes, Gerardus, Maria, 4724 CT, Wouw (NL)
(74) Representative: Lang, Johannes
(86) International application number: PCT/US2005/040522
(87) International publication number: WO 2006/062656

(56) References cited:
- EP-A- 0 506 386
- EP-A- 0 685 527
- US-B1- 6 423 768
- US-B1- 6 469 093
- PATENT ABSTRACTS OF JAPAN vol. 014, no. 106 (C-0694), 27 February 1990 (1990-02-27) & JP 01 308856 A (YOSHIZAWA SEKKAI KOGYO KK), 13 December 1989 (1989-12-13)
- DATABASE WPI Section Ch, Week 200475 Derwent Publications Ltd., London, GB; Class A25, AN 2004-763258 XP002397848 & KR 2004 060 028 A (CHEIL IND INC) 6 July 2004 (2004-07-06)
- PATENT ABSTRACTS OF JAPAN vol. 2003, no. 12, 5 December 2003 (2003-12-05) & JP 2005 264027 A (ASAHI KASEI CHEMICALS CORP), 29 September 2005 (2005-09-29)

## Description

### BACKGROUND OF THE INVENTION

This invention generally relates to thermoplastic compositions. More specifically, it relates to conductive poly(arylene ether)-polyamide compositions which can be molded and then painted to provide a high quality surface.

Poly(arylene ether)-polyamide blends have established themselves as highly attractive materials from which an extremely diverse range of products can be molded. The blends exhibit the most desirable properties of each material, i.e., outstanding heat resistance and dimensional stability from the poly(arylene ether), and excellent strength and chemical resistance from the polyamide. Exemplary disclosures of such compositions are found in U.S. Pat. Nos. 6,469,093 (Koevoets et al); 4,873,276 (Fujii et al); 4,659,760 (Van der Meer), 4,732,938 (Grant et al), and 4,315,086 (Ueno et al).

Further relevant prior art compositions are disclosed in US6423768 and EP-A-0506386

The properties of the poly(arylene ether)-polyamide blends are often enhanced by the addition of compatibilizing agents for the base resins; flow modifiers, impact modifiers, and fillers. The blends are very popular for use in molding a variety of automobile parts, e.g., body panels, trunk lids, hoods, and many smaller components, such as fuel filler doors and mirror housings. Replacement of metal automobile components with plastic parts has many advantages, such as weight reduction and the elimination of corrosion problems. However, in many automotive applications, the plastic component must appear identical to adjacent metal components, in terms of color, texture, and overall appearance.

An electrostatic painting operation is often used to apply paint to plastic and metal components in automotive assembly operations. Since such a painting operation requires that the plastic be sufficiently conductive, conductivity additives must be incorporated into the plastic. Moreover, since the paint is usually baked onto the panel at elevated temperatures (e.g., greater than 180°C), the plastic component must be able to withstand such temperatures, without degradation or warpage.

Many types of poly(arylene ether)-polyamide blends have the heat resistance needed for the painting and baking operations. Moreover, the blends have been adequately formulated to provide the necessary conductivity for electrostatic-painting, although the required additives can be expensive and difficult to handle. Their presence can also adversely affect other properties, such as ductility and surface appearance.

Technologists have become very skilled in formulating poly(arylene ether)-polyamide blends which balance a number of required properties. However problems can still occur for a variety of end use applications and manufacturing conditions. For example, it can be very difficult to ensure that a molded part has the low coefficient of thermal expansion (CTE) required in many instances. In the case of fuel filler doors and other parts which may be closely positioned between metal components, a low CTE is often critical for preventing expansion and "sticking" of the parts. These close tolerances can be very difficult to consistently maintain when the automobile is repeatedly exposed to sunlight and high outdoor temperatures during use.

Moreover, both consumers and dealers of automobiles (as well as manufacturers) place a great emphasis on the overall, painted appearance of a car or truck. A molded, painted plastic part often must have a "Class A" surface, or an appearance approaching Class A quality. As noted in U.S. Patent 5,965,655 (Mordecai et al), there are various definitions of "Class A". In general, a Class A surface as used herein is meant to describe a painted plastic surface which is substantially identical to an adjacent sheet-metal surface, in terms of texture (i.e., smoothness) and color. Furthermore, the surface should be generally free of various defects, such as splay and paint popping.

Some of the commercially-available poly(arylene ether)-polyamide compositions for electrostatic-painted applications employ talcum (talc) as a filler. While these products usually exhibit a good balance of dimensional stability, rigidity, heat resistance, and impact strength, they may exhibit some drawbacks under certain conditions. For example, when the compositions are molded, the presence of talc can lead to splay. Splay is often manifested as streaking or pale marks on the molded article - usually near the mold gate. Moreover, when the articles are painted, other surface defects sometimes occur, such as paint popping. These problems seem to be more prevalent when talcum is present along with the conductivity additive. Although a theory is not certain, it appears that talcum does not remain in the polymer matrix, and instead migrates to the surface of the molded article, during or after processing.

The undesirable surface defects can sometimes be minimized or eliminated by careful adjustment and maintenance of molding conditions, such as temperature and cycle time. However, the processing window can be very narrow, i.e., small deviations from the pre-set molding conditions bring on the occurrence of the defects. This narrow processing window is a considerable disadvantage in an industrial setting, leading to losses in processing time and efficiency.

It is therefore apparent that a need still exists for conductive poly(arylene ether)-polyamide compositions with improved characteristics for various end-uses. For example, the compositions, as molded and then electrostatically painted, should exhibit a relatively high-quality surface appearance, substantially free of the defects mentioned above. Furthermore, the desirable surface appearance should be obtainable even when the composition includes substantial amounts of filler materials. Moreover, other properties for the molded compositions should also be substantially maintained, such as dimensional stability, heat resistance, and impact strength.

### BRIEF DESCRIPTION OF THE INVENTION

A conductive thermoplastic resin composition is described. The composition comprises:
(a) 20% by weight to 80% by weight of a poly(arylene ether);
(b) 80% by weight to 20% by weight of a polyamide;
(c) a compatibilizing agent for components (a) and (b);
(d) a conductivity-imparting agent for the resin composition; and
(e) 1% to 50% clay, based on the weight of the entire composition.
wherein the clay material is in the form of plate-like laminates, and is often calcinated. Moreover, the clay can also be surface-modified (e.g., with aminosilanes), as described below. The composition can include various other constituents, such as impact modifiers. Furthermore, in some embodiments, the composition is substantially free of talc. Articles molded from these compositions and then painted, such as automotive components, also form part of this invention.

Another embodiment is directed to a method for producing a painted thermoplastic article, comprising the following steps:
(I) combining at least one polyphenylene ether, at least one polyamide, a compatibilizing agent, a conductivity-imparting agent, and a clay filler material, wherein the clay material comprises plate-like laminates, to form an intimate blend;
(II) molding the blend formed in step (I) into the article; and
(III) electrostatically painting the molded article formed in step (II).

The painted article has a surface characterized by fewer defects than a surface produced when the conductive blend formed in step (I) comprises a talc filler in place of the clay filler.

### BRIEF DESCRIPTION OF THE DRAWINGS

FIG. 1 is a photomicrograph of a painted test specimen molded from a conventional poly(arylene ether)-polyamide composition.
FIG. 2 is a photomicrograph of a painted test specimen molded from a poly(arylene ether)-polyamide composition according to the present invention.

### DETAILED DESCRIPTION OF THE INVENTION

The thermoplastic compositions of the present invention comprise a compatibilized blend of a polyphenylene ether resin (or other poly(arylene ether)) and a polyamide resin. (For the sake of simplicity, the term "polyphenylene ether" or "PPE" will be used herein at times, with the understanding that the full scope of this component is embraced by "poly(arylene ether)"). These blends are well-known in the art, and described in many references, some of which are mentioned above. Non-limiting examples include U.S. Pat. Nos. 4,873,276 (Fujii et al); 4,659,760 (Van der Meer), 4,732,938 (Grant et al), 4,997,612 (Gianchandai et al); 4,315,086 (Ueno et al); 6,469,093 (Koevoets et al); and 6,221,283 (Dharmarajan et al).

The polyphenylene ether resins useful in the present invention include all known polyphenylene ether resins. Preferable resins include poly(2,6-dimethyl-1,4-phenylene ether), as well as copolymer resins of 2,6-dimethylphenol and 2,3,6-trimethylphenol. In compositions wherein high heat resistance is desired to accommodate, for example, paint cure ovens, PPE's having a glass transition temperature (Tg) higher than the oven temperature are desirable. The intrinsic viscosity is typically between about 0.20 and about 0.60 dl/g as measured in chloroform at 25°C. Other variations in the resins may also be useful, based upon similar principles.

The polyamide resins - often referred to as "nylons" - are usually characterized by the presence of an amide group (-C(O)NH-). Nylon-6 and nylon-6,6 are the generally preferred polyamides, and are available from a variety of commercial sources. However, other polyamides are also possible, such as nylon-4,6; nylon-4; nylon-12; nylon-6,12; nylon-6,10; nylon-6,9; nylon-6/6T; nylon-6,6/6T; nylon-9T, as well as amorphous nylons. Mixtures of various polyamides, as well as various polyamide copolymers, are also useful. The polyamide may also be one or more of those referred to as "toughened nylons" (see U.S. Patent 4,997,612), which are often prepared by blending one or more polyamides with one or more polymeric or copolymeric elastomeric toughening agents.

The most preferred polyamide for the blends of the present invention is polyamide-6,6. The polyamides can be obtained by a number of well known processes, as described in U.S. Patent 6,469,093, and patents referenced therein. The weight ratio of PPE to polyamide can vary considerably, e.g., from about 80 : 20 to about 20 : 80, with a ratio in the range of about 25 : 75 to about 45 : 55 being preferred.

Various compatibilizing agents can be used in the PPE-polyamide compositions. Most are well-known in the art, e.g., U.S. Patents 6,469,093 and 4,997,612, referenced above. Non-limiting examples include liquid diene polymers, epoxy compounds; an oxidized polyolefin wax; quinones; organosilane compounds; polyfunctional compounds; polycarboxylic acids; and a combination comprising at least one of the foregoing compatibilizing agents. Functionalized PPE's may also be used as the compatibilizer, e.g., those formed by reacting one or more of the above-mentioned compatibilizing agents with PPE itself. Some specific examples of the compatibilizing agents are as follows: citric acid, maleic anhydride, fumaric acid, malic acid, trimellitic anhydride acid chloride, as well as various derivatives of the foregoing. The specific amount of compatibilizing agent employed will depend on the specific agent chosen, as well as the specific polymeric system to which it is added. Usually, the compatibilizing agent is present at a level of about 0.05% to about 4% by weight, based on the weight of the entire composition.

The conductivity-imparting agent (sometimes referred to herein as the "conductive material") can be selected from a variety of materials, with the proviso that it does not significantly affect the physical characteristics of the thermoplastic composition in an adverse manner. It is often a carbon-based material, such as carbon black ("CCB"; e.g. Ketjenblack EC 600 JD available from AKZO, Deventer, The Netherlands), or carbon fibrils ("CF"), (e.g., BN fibrils available from Hyperion Catalysis International, Cambridge, Mass., USA).

Carbon fibrils are sometimes preferred. Exemplary materials of this type are disclosed in U.S. Patent 6,221,283 and Patent WO/94/23433 (also incorporated herein by reference). The carbon fibrils are typically in the form of vermicular tubes, with graphitic outer layers disposed substantially concentrically about the cylindrical axis of the fibril. Carbon fibrils usually have a length-to-diameter ratio of at least about 5, and more preferably, at least about 100. Even more preferred are fibrils whose length-to-diameter ratio is at least about 1,000. The wall thickness of the fibrils is about 0.1 to 0.4 times the fibril external diameter, which is preferably between about 3.5 and 75 nanometers.

Usually, the amount of conductive material present is that amount which will result in a final resin composition having a specific volume resistivity below about 1x10⁵ Ohm-cm, and preferably below about 1x10⁴ Ohm-cm. The surface resistance is usually above about 1x10⁵ Ohm, and preferably above about 1x10⁶ Ohm. In some especially preferred embodiments, the resin composition has a specific volume resistivity below about 4x10⁴ Ohm-cm, and has a surface resistance above about 3.5x10⁶ Ohm. When the specific volume resistivity is below about 10⁴ Ohm-cm, the resin composition is sufficiently conductive to allow for electrostatic painting. Conversely, when the surface resistance is above about 10⁵ Ohm, the composition may not be conductive enough to successfully permit the electrodeposition of a corrosion inhibitor on the molded component. (The electrical properties of the resin composition can be measured by various techniques. One suitable method is described in the referenced patent issued to Koevoets, U.S. 6,469,093).

The most appropriate level of conductive material will depend on a number of factors, such as the type of additive (e.g., its inherent conductivity); the ratio of PPE to polyamide resin, and the molding conditions employed. Usually, the conductive material is present at a level in the range of about 0.1% by weight to about 10% by weight, based on the weight of the entire composition. Typically (but not always), when the conductivity material comprises carbon black, it is present in an amount between about 0.5% by weight and about 3% by weight. Moreover, when the resin composition comprises a conductive carbon fibril, it is usually present in an amount between about 0.1 % by weight and about 3% by weight, all based on the weight of the entire resin composition.

The resin composition further comprises an appropriate amount of clay, which is used as a filler or extender to provide various characteristics, e.g., firmness, strength, and moldability. As used herein, the term "clay" is generally meant to embrace some form of hydrated (hydrous) aluminum silicate, and is described in many references.

As non-limiting examples, the following texts are instructive, and are incorporated herein by reference: "The Encyclopedia Americana" (International Edition), Grolier Inc., Volume 7, 1981, pp. 36-37; and the "Modern Plastics Encyclopedia", 1990 (Mid-October Issue, V. 67, No. 11), McGraw Hill, p. 252. The proportions of water, aluminum, and silicon may vary for a given species of clay. Moreover, clay material often contains minor amounts of various other elements, such as sodium, potassium, calcium, magnesium, and ferrous- or ferric iron.

The mineral constituents of clay give rise to various groups of the material, e.g., kaolin and montmorillonite. Non-limiting examples of specific minerals within these groups are as follows: kaolinite, dickite, nacrite, anauxite, halloysite, allophane, bentonite, and the like. Some of the minerals in the kaolin group generally have one of the following chemical compositions, or combinations thereof: (Al₂O₃ • 2SiO₂ • 2H₂O); (Al₂O₃ • 3SiO₂ • 2H₂O); or (Al₂O₃ • 2SiO₂ • 4H₂O). (Some of the mineral compounds may have the same chemical formula, but they differ in crystallization). In some preferred embodiments for this invention, the clay is kaolin-based, e.g., in the form of kaolinite, although other constituents may also be present.

Clay is often obtained and used in various physical forms, e.g., flake and plate-like structures. For the present invention, the clay preferably comprises particles which are in the form of plate-like laminates (though they may be somewhat irregularly-shaped). The particles usually have an average particle size (through their largest dimension) in the range of about 0.3 micron to about 50 microns, and more preferably, from about 0.5 micron to about 15 microns. In especially preferred embodiments, the average particle size ranges from about 0.5 micron to about 5 microns. (Kaolins are naturally fine in particle size, with an MPS (median particle size) which is usually between about 0.3 micron to about 5 microns.

Those skilled in the art of reinforced plastics understand that clay materials are often obtained and treated by a number of techniques. For example, kaolin materials such as kaolinite can be produced in various forms, e.g., water-washed, calcinated (calcined), and air-floated. The clay can also be delaminated, to separate plate-like structures from each other.

In some preferred embodiments, the clay used herein is calcinated. Calcination can be carried out by conventional methods, and generally results in more uniform clay particles with low 325-mesh residue. U.S. Patent 4,528,303 (Segaud) is incorporated herein by reference, and provides a non-limiting example of one calcination process. In the Segaud reference, the calcination treatment involves heating the clay to a temperature of at least about 800°C, under ambient conditions, or in a nitrogen- or moist-air atmosphere. In some instances, the heating step is said to cause dehydroxylation of the clay, resulting in a low-moisture clay. Calcination temperatures can vary quite a bit, depending, for example, on how much moisture (free or bonded within the clay structure) should be removed.

In some preferred embodiments, the clay is also surface-modified, so as to provide reactive functionality to the material. The reactivity can be very advantageous because it allows the clay to become chemically bonded to the PPE-polyamide matrix. It is thought that this bonding helps to prevent the clay from migrating to the surface of the molded polymer during or after processing, thereby enhancing the surface appearance.

Various types of additives can be used to modify the clay surface in such a manner. Non-limiting examples are provided in U.S. Patents 6,808,808 and RE-30,450, which are incorporated herein by reference. As an example, the clay can be treated with a functionalized silane compound, by known techniques. To illustrate, a "functionalized" silane compound (e.g., an organosilane compound) can be one which includes one or more hydrolytic alkoxy groups which generate silanol groups, and can form covalent bonds with the surface hydroxyl groups of clay, by means of condensation. The compounds also typically include functional organic moieties which can form bonds with the surrounding organic matrices, i.e., in the PPE-polyamide polymer. Examples of the hydrolytic groups are ethoxy or methoxy groups.

Non-limiting examples of functionalized organosilanes are those which have pendant epoxy or amino reactive groups, such as 3-glycidyloxypropyl-trimethoxysilane and 3-aminopropyltriethoxysilane. However, other suitable epoxy- or amino-functional silanes could also be used in the pre-treatment of the clay. These compounds are commercially available. The amount of functionalizing agent usually ranges from about 0.1 % to about 5%, based on the dry weight of the clay, but this range can vary as well.

The amount of clay present in the polymer composition will depend on various factors, such as the ratio of PPE to polyamide resin, the types and amounts of other components present in the composition; molding conditions, end-use requirements for the molded article, and compounding capability. Usually, the clay is present at a level in the range of about 1% by weight to about 50% by weight, based on the weight of the entire composition. In preferred embodiments, the level is in the range of about 10% by weight to about 30% by weight, and in some especially preferred embodiments, the level is in the range of about 15% by weight to about 25% by weight. Those skilled in the art will be able to readily determine the most appropriate level of clay for a given end-use application, based in part on the teachings set forth in this specification.

The compositions of this invention frequently include various impact modifiers, most of which are well-known in the art. Those which are employed enhance the impact properties of the molded article, without substantially affecting the other physical properties of the composition of this invention. Particularly useful materials are various elastomeric block copolymers and core-shell copolymers. Such materials are described in many references, like some of those mentioned above, as well as in U.S. Patent 5,965,655 (Mordecai et al), which is incorporated herein by reference.

Non-limiting examples of the block copolymers include A-B-A triblock copolymers and A-B diblock copolymers. These materials are usually thermoplastic rubbers comprised of one or two alkenyl aromatic blocks which are typically styrene blocks, and a rubber block, e.g., a butadiene block which may be partially hydrogenated. Mixtures of these triblock copolymers and diblock copolymers are sometimes useful. Specific examples of block copolymers are styrene-butadiene-styrene triblock copolymers; styrene-ethylene/butylene-styrene triblock copolymers; styrene-ethylene/propylene-styrene triblock copolymers; and styrene-butadiene diblock copolymers.

Non-limiting examples of the core-shell impact modifiers are the "all-acrylic" materials. These may have, for example, a polyacrylate core such as polybutyl acrylate, with a shell of a methyl methacrylate, such as styrene-methylmethacrylate, or an acrylonitrile-methylmethacrylate shell. Another type of core-shell impact modifier is one having a polybutadiene core that is preferably cross-linked, with an acrylate shell such as those mentioned above.

The amount of impact modifier which may be optionally employed herein depends on various factors, most of which were mentioned previously. Usually, the modifier is present at about 0.5 % by weight to about 25% by weight, based on the weight of the entire composition. In some preferred embodiments, the level is in the range of about 0.5% by weight to about 10% by weight.

The compositions of this invention can also include effective amounts of various additives. Non-limiting examples include: stabilizers, antioxidants, lubricants, flame retardants, drip retardants, dyes, pigments, colorants, antistatic agents, plasticizers, and combinations of any of the foregoing. These additives are known in the art, as are their effective levels and methods of incorporation. Effective amounts of the additives vary widely, but they are usually present in an amount up to about 40% by weight, based on the weight of the entire composition. The preferred amounts of these additives usually ranges from about 0.1% by weight to about 2% by weight, based on the total weight of the composition. However, the flame retardant can sometimes be present at a level of up to about 20% by weight. (Moreover, in addition to the clay material, the compositions may sometimes include one or more additional fillers and/or reinforcing agents, as long as they do not adversely affect the appearance or properties of the molded article).

In some preferred embodiments, the polyphenylene ether-polyamide blends are substantially free of talc. While talc is a common filler in some polyphenylene ether-polyamide blends, its presence can lead to surface defects when the blends are made conductive and then electrostatically painted, as described previously. The present inventor discovered that the use of clay, rather than talc, in compositions of this type, can significantly improve the surface appearance of the molded and painted article, while substantially maintaining other important physical properties for the article. In other embodiments, the polyphenylene ether-polyamide blends are also substantially free of mica.

In general, the compositions of this invention are prepared by melt-blending the various ingredients to form an intimate blend, according to conventional procedures. Such conditions often include mixing in single or twin-screw type extruders, or similar mixing devices which can apply a shear to the components. All of the ingredients may be added initially to the processing system, or else certain additives may be pre-compounded with one or more of the primary components - preferably the PPE, the optional elastomers, and/or the polyamide. In some instances, certain properties such as impact strength and elongation can be enhanced by initially pre-compounding the PPE, elastomeric copolymers (if present), and some of the other ingredients, prior to compounding with the polyamide resin at a downstream location. However, care should be taken to maintain the viscosity of the compatibilized composition at an acceptable level. It is often advantageous to apply a vacuum to the polymer melt through at least one or more vent ports in the extruder, to remove volatile impurities in the composition.

Those familiar with polymer processing are very aware of other details regarding extrusion and other melt-blending procedures. They would be able to adjust blending times and temperatures, as well as component addition, without undue, additional experimentation. Moreover, those of ordinary skill are familiar with subsequent production steps, e.g., cooling and pelletization, and then drying before the molding step. Molding of the compositions can then be carried out at appropriate temperatures, according to conventional procedures, e.g., the use of commercial injection-molding machines. Many of the references cited herein contain details regarding extrusion and molding processes.

Another embodiment of this invention is directed to a method of preparing a conductive thermoplastic composition. The method is based on the step of combining at least one polyphenylene ether, at least one polyamide, a compatibilizing agent, a conductivity-imparting agent, and a clay filler, as described previously. (Other components can also be added by this method, e.g., the elastomeric polymers). Moreover, painted thermoplastic articles can be prepared from these compositions, by molding the compositions as described above, and then electrostatically-coating the molded article. An important attribute of the method is the ability to prepare articles (such as automotive parts) with good physical properties, along with a highly-desirable surface appearance.

### EXAMPLES

The examples which follow are merely illustrative, and should not be construed to be any sort of limitation on the scope of the claimed invention.

The following materials were used in the examples:
PPE: Poly(2,6-dimethyl-1,4-phenylene) ether resin having an intrinsic viscosity, in chloroform at 25°C, of about 0.4 dl/g.
SEBS: G-1651™ polystyrene-poly(ethylene-butylene)-polystyrene, obtained from Kraton Polymers.
Citric Acid.
PELTP: Stabilizer: Pentaerythritol tetrakis(3-laurylthiopropionate), obtained from Clariant Benelux (Sandostab™4020).
Antioxidant: Irganox™ 1098, available from Ciba Specialty Chemicals.
Antioxidant: Irganox™ 1076 (hindered phenol), available from Ciba Specialty Chemicals.
KI: Potassium iodide.
CuI: Copper (I) iodide.
PETS: Pentaerythritol tetrastearate, obtained from Lonza Benelux.
Polyamide: Nylon 6,6 grade Ultramid™ 105, having an amine end-group number of about 50 meq, and a relative viscosity of about 2.4 in 96% H₂SO₄
Talc: Fintalc™ M15: 3MgO•4SiO₂eH₂O, average particle size of 4.8 microns.
Fintalc™ M03: 3MgO•4SiO₂•H₂O, average particle size of 1.2 microns.
Wollastonite: Nyglos™ 4 (modified surface), obtained from Nyglos Minerals.
Clay: Calcinated clay (aluminum silicate), available as Translink® 445 from Engelhard Corporation, Iselin, N.J. The clay was aminosilane-surface-modified, and had an MPS (median particle size) of 1.4 microns, with a +325 mesh residue of 0.02. The maximum free moisture of the clay was about 0.5% (pretreatment value).
Conductivity Agent: Conductive Carbon Black: EC600JD, obtained from AKZO Nobel.

A 28 mm Werner and Pfleiderer twin screw extruder was used for the experiments, having a total length of 12 barrels. The extruder had multiple downstream ports for the selected side-feeder addition of certain ingredients, as indicated in Table 1. For each sample, the constituents for the throat-addition were combined by blending and then feeding to the extruder. The polyamide (polyamide-6,6) and the appropriate filler were initially combined to form a masterbatch. These masterbatches were produced on a separate, 28 mm twin screw extruder, having a total length of 9 barrels. The successive extruder temperature settings ranged from about 60°C to about 300°C, with the die temperature at about 290°C, resulting in a melt temperature of about 320° C. All of the polyamide (55%) was fed via the throat. The fillers were partly fed via the throat (20%), and partly fed via a side-feeder (25%).

40% of the appropriate polyamide-filler masterbatch was added to the final formulation in the primary extruder, replacing 22% of the polyamide and 18% of the filler according to the calculated formulation. Addition of the masterbatch was made by way of one downstream port ("Sidefeeder 1" in Table 1), while the conductive material was added by way of a second downstream port, Sidefeeder 2. Extruder screw speed was 300 rpm. The successive extruder temperature settings ranged from about 60°C to about 300°C, with the die temperature at 310°C, resulting in a melt temperature of about 340°C.

The use of clay as a filler for the conductive compositions was compared to conventional fillers, i.e., talc and wollastonite. The overall compositions are set forth in Table 1:

**Table 1**

| **Throat** | **Components** | **#1^{a}** | **#2^{a}** | **#3^{b}** | **#4^{a}** | **#5^{a}** | **#6^{a}** |
|---|---|---|---|---|---|---|---|
| | | Talc* | Wollastonite | Clay | Talc* | Talc* | Talc** |
| | PPE, 0.40 IV | 25.9 | 25.69 | 25.9 | 25.7 | 24.9 | 25.9 |
| | SEBS | 5.5 | 5.5 | 5.5 | 5.5 | 5.5 | 5.5 |
| | Citric Acid | 0.7 | 0.7 | 0.7 | 0.7 | 0.7 | 0.7 |
| | PELTP | 0.1 | | 0.1 | 0.2 | 0.1 | 0.1 |
| | Irganox™ 1076 | | 0.3 | | | | |
| | Irganox™ 1098 | 0.1 | | 0.1 | 0.2 | 0.1 | 0.1 |
| | CuI | | 0.01 | | | | |
| | PETS | | | | | 1.0 | |
| | | | | | | | |
| | (Total Powder Feeder) | 32.3 | 32.3 | 32.3 | 32.3 | 32.3 | 32.3 |
| **Side-feeder #1** | ↓ | | | | | | |
| | PA 66, 2.4 RV | 48 | 48 | 48 | 48 | 48 | 48 |
| | Talc | 18 | | | 18 | 18 | 18 |
| | Wollastonite | | 18 | | | | |
| | Clay | | | 18 | | | |
| | | | | | | | |
| | (Total Side Feeder 1) | 66 | 66 | 66 | 66 | 66 | 66 |
| | | | | | | | |
| **Side-feeder #2** | ↓ | | | | | | |
| | Carbon Black | 1.7 | 1.7 | 1.7 | 1.7 | 1.7 | 1.7 |
| | (Total Side Feeder 2) | 1.7 | 1.7 | 1.7 | 1.7 | 1.7 | 1.7 |
| | **Formulation Total** | 100 | 100 | 100 | 100 | 100 | 100 |

| | | | | | | | |
|---|---|---|---|---|---|---|---|
| (a) Comparative Example; (b) Present Invention * Talc: Fintalc™ M15 ** Talc: Fintalc™ M03 | | | | | | | |

The extrudate for each sample was cool-water quenched, and then pelletized. The compositions were then dried and injection-molded into test specimens (175 mm x 175 mm x 2.5 mm), using a 150 ton Engel machine. The melt temperature was set at 300°C, with a mold temperature between about 75-80°C. A cycle time of about 40-45 seconds was achieved.

The test specimens (plaques) were conventionally painted with an electrostatic primer composition. The primer was a black anthracite, solvent-based system supplied by Ford Motor Company. A conventional spray gun was used to apply one layer of primer. Curing conditions for the primer system were as follows: 20 minutes, at 130° C. The thickness of the coating (after curing) was approximately 20 microns in each instance. The coatings were then inspected, using an optical microscope.

Table 2 provides a summary for the results of the visual inspection of the coatings.

**Table 2**

| | **#1** | **#2** | **#3** | **#4** | **#5** | **#6** |
|---|---|---|---|---|---|---|
| Filler in sample | Talc | Wollastonite | Clay | Talc | Talc | Talc |
| Surface Appearance After Painting | NOT OKAY | OKAY | OKAY | NOT OKAY | NOT OKAY | NOT OKAY |

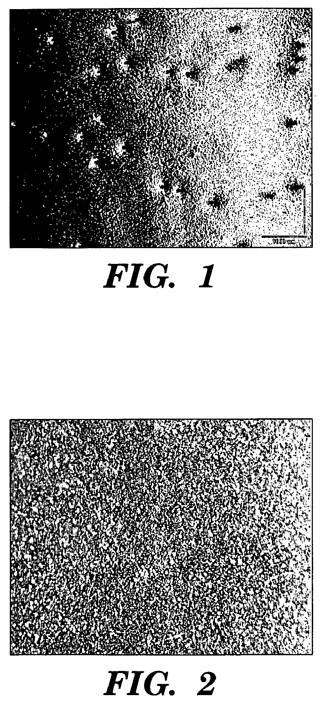

The coated article of sample 1 is shown in FIG. 1, which is a photomicrograph, at approximately 10X magnification. Paint popping is prevalent throughout the surface. Moreover, samples 4, 5, and 6 also exhibited paint popping. Sample 2, which contained wollastonite as the filler, had a good surface appearance. (However, as described below, the use of wollastonite has other drawbacks).

The coated article of sample 3, which employed clay according to the present invention, is shown in FIG. 2, which is also a photomicrograph, at 10X magnification. The surface was of high quality, and free of paint popping and other imperfections. Moreover, the composition of sample 3 was comparable to the other compositions listed in Table 1, in terms of physical properties, such as impact strength, rigidity, and heat resistance. For example, while there was a small decrease in CTE-reduction and stiffness, there was a small increase in impact strength.

Compositions like those of sample 2 (wollastonite-filled) exhibit deficiencies, in terms of dimensional stability. Wollastonite is usually in the form of needle-shaped fibers, with relatively high L/D ratios, e.g., about 1 : 10. This property is thought to have a negative effect on dimensional stability and warpage.

In marked contrast, articles molded from sample 3 (clay-containing) exhibited no evidence of warpage. Furthermore, the CTE values for sample 3, in both the flow-and cross-flow directions, were comparable to samples which employ talc as a filler material. As described previously, dimensional stability and freedom from warpage are critical attributes when the compositions are being used for parts which require close tolerances over the lifetime of the part. When coupled with the high-grade surface appearance for electrostatically-painted parts, the compositions claimed herein represent a significant advancement in the art.

Other modifications and various of the invention may occur to one skilled in the art, without departing from the spirit and scope of the claimed inventive concept. All of the patents, articles, and texts which are mentioned above are incorporated herein by reference.

## Claims

1. A conductive thermoplastic resin composition, comprising:
(a) 20% by weight to 80% by weight of a poly(arylene ether);
(b) 80% by weight to 20% by weight of a polyamide;
(c) a compatibilizing agent for components (a) and (b);
(d) a conductivity-imparting agent for the resin composition; and
(e) 1% to 50% by weight clay, based on the weight of the entire composition, wherein the clay of component (e) comprises plate-like laminates..

2. The composition of claim 1, wherein the conductivity-imparting agent of component (d) comprises at least one material selected from the group consisting of conductive carbon black and conductive carbon fibrils.

3. The composition of claim 1, wherein the clay has an average particle size in the range of 0.3 micron to 50 microns.

4. The composition of claim 1, wherein the clay is calcinated.

5. The composition of claim 4, wherein the clay is surface-modified, so as to provide reactive functionality on at least a portion of the clay surface.

6. The composition of claim 5, wherein the clay is surface-modified with an organosilane compound.

7. The composition of claim 1, substantially free of talc.

8. A thermoplastic article molded from the composition of claim 1.

9. A method of producing a painted thermoplastic article, comprising the following steps:
(I) molding the composition of claim 1 into the article; and
(II) electrostatically painting the molded article formed in step (I).

## Patentansprüche

1. Leitende thermoplastische Harzzusammensetzung, umfassend:
(a) 20 Gewichts-% bis 80 Gewichts-% eines Poly(arylenether)s;
(b) 80 Gewichts-% bis 20 Gewichts-% eines Polyamids;
(c) einen Verträglichkeitsvermittler bzw. ein Kompatibilisierungsmittel für Komponenten (a) und (b);
(d) ein Leitfähigkeit verleihendes Mittel für die Harzzusammensetzung; und
(e) 1 Gewichts-% bis 50 Gewichts-% Ton, bezogen auf das Gewicht der gesamten Zusammensetzung, wobei der Ton der Komponente (e) plattenförmige Laminate umfasst.

2. Zusammensetzung nach Anspruch 1, wobei das Leitfähigkeit verleihende Mittel von Komponente (d) wenigstens ein Material ausgewählt aus der Gruppe bestehend aus leitfähigem Ruß und leitfähigen Kohlenstofffibrillen umfasst.

3. Zusammensetzung nach Anspruch 1, wobei der Ton eine durchschnittliche Teilchengröße im Bereich von 0,3 Mikron bis 50 Mikron aufweist.

4. Zusammensetzung nach Anspruch 1, wobei der Ton calciniert ist.

5. Zusammensetzung nach Anspruch 4, wobei der Ton oberflächenmodifiziert ist, um auf diese Weise eine reaktive Funktionalität auf wenigstens einem Teil der Tonoberfläche bereit zu stellen.

6. Zusammensetzung nach Anspruch 5, wobei der Ton mit einer Organosilan-Verbindung oberflächenmodifiziert ist.

7. Zusammensetzung nach Anspruch 1, im Wesentlichen frei von Talk.

8. Thermoplastischer Gegenstand geformt aus der Zusammensetzung nach Anspruch 1.

9. Verfahren zur Herstellung eines lackierten thermoplastischen Gegenstands, umfassend die folgenden Schritte:
(1) Formen der Zusammensetzung nach Anspruch 1 zu dem Gegenstand; und
(2) elektrostatisches Lackieren des in Schritt (1) geformten Formgegenstands.

## Revendications

1. Une composition de résine thermoplastique conductrice, comprenant :
(a) 20 % en poids à 80 % en poids d'un poly(éther d'arylène) ;
(b) 80 % en poids à 20 % en poids d'un polyamide ;
(c) un agent de compatibilisation pour les composants (a) et (b) ;
(d) un agent procurant de la conductivité pour la composition de résine ; et
(e) 1 % à 50 % en poids d'argile, sur la base du poids de la composition totale, l'argile du composant (e) comprenant des stratifiés semblables à des plaquettes.

2. La composition de la revendication 1, dans laquelle l'agent procurant de la conductivité du composant (d) comprend au moins un matériau choisi dans le groupe formé par le noir de carbone conducteur et les fibrilles de carbone conductrices.

3. La composition de la revendication 1, dans laquelle l'argile présente une dimension moyenne de particule dans la plage allant de 0,3 micron à 50 microns.

4. La composition de la revendication 1, dans laquelle l'argile est calcinée.

5. La composition de la revendication 4, dans laquelle l'argile est modifiée en surface de manière à procurer une fonctionnalité réactive sur au moins une partie de la surface de l'argile.

6. La composition de la revendication 5, dans laquelle l'argile est modifiée en surface avec un composé organosilane.

7. La composition de la revendication 1, substantiellement dépourvue de talc.

8. Un article thermoplastique moulé à partir de la composition de la revendication 1.

9. Un procédé de production d'un article thermoplastique peint, comprenant les étapes suivantes :
(I) moulage de la composition de la revendication 1 pour donner l'article ; et
(II) peinture électrostatique de l'article moulé formé à l'étape I.
